Europäisches Patentamt

European Patent Office

Office européen des brevets

(11) Publication number: **0 143 996**
**B1**

# EUROPEAN PATENT SPECIFICATION

(45) Date of publication of patent specification: 27.01.88

(51) Int. Cl.⁴: $G\ 01\ T\ 1/29$

(21) Application number: 84113152.7

(22) Date of filing: 31.10.84

(54) Ionization chamber for measuring the profile of a radiation field of electron or X-ray radiation.

(30) Priority: 17.11.83 US 552642

(43) Date of publication of application:
12.06.85 Bulletin 85/24

(45) Publication of the grant of the patent:
27.01.88 Bulletin 88/04

(84) Designated Contracting States:
CH DE FR LI NL

(56) References cited:
GB-A-1 408 292
US-A-2 953 702
US-A-3 937 966

MEDICAL PHYSICS, vol.7, no.2, March/April
1980, pages 163-164, New York, (US): D.J.
KEYS et al.: "Thin-walled parallel plate
ionization chamber for use with photon and
electron beam dosimetry"

(73) Proprietor: Siemens Aktiengesellschaft Berlin
und München
Wittelsbacherplatz 2
D-8000 München 2 (DE)

(72) Inventor: Chamberlain, Jerry E.
706 Olivewood Court
Pittsburgh California 94565 (US)

## Description

### Background of the Invention

#### 1. Field of the Invention

The present invention relates to an ionization chamber for measuring the profile of radiation field. In particular, this invention relates to an ionization chamber for electrons or X-rays, preferably for use in or in conjunction with a linear accelerator.

#### 2. Description of the Prior Art

Ionization chambers for analyzing inhomogeneities in a radiation field are in general well known in the prior art (e.g. U.S. Patents 4,131,799, 3,942,012, 3,997,788, 3,852,610 or 4,047,040). However, all these ionization chambers do not allow for measurement of the profile of the radiation field.

A proton profile measuring device is described in the article "A Simple, Nondestructive Profile Monitor For External Proton Beams" by F. Hornstra and J. R. Simanton in Nuclear Instruments and Methods 68 (1969) 138-140; North-Holland Publishing Co. This device comprises a net of wires as profile indicator. However, a net of wires is not exact enough for profile measurements.

Conventional ionization chambers are frequently too thick for use in the field. The measuring volume of such chambers is too large in order to perform measurements of the profile of the ionization radiation in a direction transverse to its main direction of propagation.

In the prior art, in connection with linear accelerators measurements of a profile known as the "central axis depth dose" are carried out by an ionization chamber which has a fixed measurement volume and which is brought to different depths of a water bath. The reason for immersing such a scanner into water is that water has aproximately the same radiation build-up effect as the human tissue and flesh. Thus, the intensity versus the depth can be determined for various accelerator energies, which is important to know for radiation treatment of a patient. Yet, the use of water in determination of the central axis depth dose has proven to be inconvenient for various reasons.

### Summary of the Invention

#### Objects

It is an object of this invention to provide an improved ionization chamber which allows for measuring the profile of a radiation field with high accuracy.

It is another object of the invention to provide an improved ionization chamber which is portable.

It is still another object of the invention to provide an ionization chamber which can be used as an accessory for a linear accelerator.

It is still another object of the invention to provide an improved ionization chamber which allows for central axis depth dose measurements without using water.

### Summary

Acording to this invention an ionization chamber for measuring the profile of a radiation field is provided, which comprises:

a) a first electrode;

b) a second electrode arranged parallel to said first electrode, both electrodes forming a gap therebetween;

c) a shield made of a material opaque to ions produced by the radiation field, said shield being movably arranged in said gap between said electrodes and having an aperture, said aperture arranged between said electrodes forming a mesuring volume; and

d) means for moving said shield together with said aperture along said gap between said electrodes.

The aperture can be made very small. Thus, an ionization chamber is formed having a very small measuring volume, which volume can be moved along the gap between the electrodes. The small and movable measuring volume allows for measuring the profile of a radiation field with high accuracy. That is, intensity measurements transversely to the direction of the radiation can be performed.

The invention may be used in a horizontal embodiment as a portable version for field measurements of the intensity distribution across a radiation field. The invention may also be used in a vertical embodiment which is directly attached to a linear accelerator for measuring its central axis depth dose. Thereby, the use of water can be avoided. The ionization chamber may also be attached to another radiation source. In short, the ionization chamber may preferably be used by service people in the field or as an accessory in a hospital.

### Brief description of the drawings

In the drawings:

Fig. 1 is a horizontal embodiment of the invention, shown in a perspective, partially cut-away view;

Fig. 2 is a top view of the horizontal embodiment;

Fig. 3 illustrates a first end position of the aperture;

Fig. 4 illustrates a second end position of the aperture; and

Fig 5. is a vertical embodiment of the invention.

### Detailed Description of the Preferred Embodiment

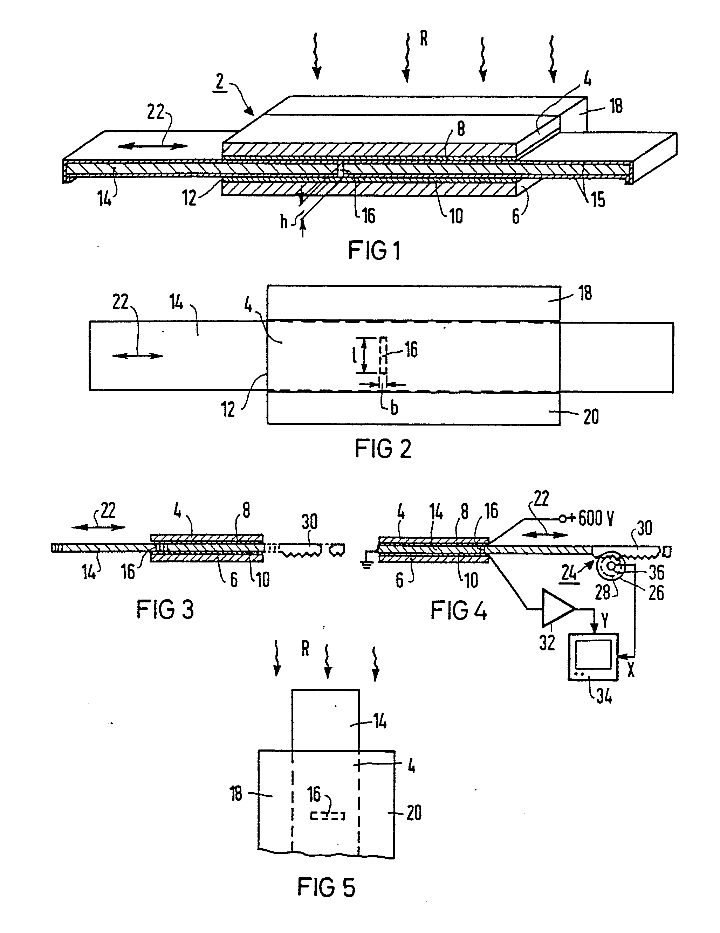

In Figs. 1 to 4 an ionization chamber 2 comprises two flat plates 4 and 6 (e.g. of Lucite) having a first metallic (high voltage) electrode 8 and a second metallic (collecting) electrode 10, respectively. The plates 4, 6 and the electrodes 8, 10 are arranged parallel to each other, such that they form a gap 12 therebetween. In this gap 12 a shield 14 is movably positioned. It slides between the electrodes 8, 10. The shield 14 is made of a material which is opaque to ions produced by a radiation field R. It may comprise a conducting material such as copper. The shield 14 is coated with an insulation material 15, e.g. Lucite. The shield 14 contains a narrow air aperture or elongated rectangular hole 16 which forms a measuring volume between the electrodes 8 and 10. The dimensions of the aperture 16 may be, for example, h = 5 to 8 mm; b = 2 to 3 mm and l = 5 to 10 mm. The open side areas of the gap 12 are covered by side walls 18 and 20, e.g. of Lucite.

The shield 14, which is at least twice the length of the plates 4 and 6 and the electrodes 8 and 10, respectively, is slidable in the gap 12 between the electrodes 8 and 10 in the directions of the double arrow 22. Thereby, the aperture 16, which extends perpendicularly to the moving direction of the shield 14, can be moved between a first position at the left side and a second position at the right side of the plates 4, 6 and electrodes 8, 10. The first position is shown in Fig 3, and the second position is illustrated in Fig. 4. A motor drive 24 comprising a motor 26, a rack wheel 28 and a rack 30 for moving or scanning the shield 14 is schematically shown in Fig. 4.

When moving the aperture 16 between the two aforementioned positions (also indicated by dotted lines in Fig. 3), the profile of the radiation field R depicted in Fig. 1 can be measured with high accuracy.

For this purpose the electrode 8 is supplied with a high voltage, such as +600V, as indicated in Fig 4. The electrode 10 is connected via an amplifier circuit 32 (comprising ionization current amplifiers, integrators, etc., which are standard parts of a linear accelerator does monitoring device) with the Y input of a display unit 34, e.g. a plotter. The X input of the display unit 34 is connected to a potentiometer 36 which is driven by the motor 26 of the motor drive 24.

The shield 14 is electrically grounded. It completely blocks the electrostatic field between the first (high voltage) electrode 8 and the second (collecting) electrode 10 except at the location where the aperture 16 is cut into the shield 14. Through this aperture 16 ions which are produced by the radiation field R can flow to the collecting electrode 10, thereby generating a signal at this electrode 10 which is a measure for the energy of the radiation field at the location of the aperture 16. Thus, the aperture 16 represents the measuring volume.

The effective chamber volume of the ionization chamber and hence the sensitivity is determined by the product of the aperture height l, the aperture width b and the electrode separation h. The dimensions l and h may be optimized for chamber sensitivity) then only the dimension b effects the degree of resolution.

The ionization chamber may be directly attached to the source of radiation, e.g. a linear accelerator (not shown). The embodiment according to Fig. 1 may also be used as a portable version for field mesurements of intensity distributions across the radiation field R.

The horizontal embodiment of Fig. 1 can also be used in a vertical position as shown in Fig. 5. In this case, the central axis depth dose of a linear accelerator can be measured without using water.

In the embodiments of Fig. 1 to 5, the electrodes 8, 10 may be made, for example, of copper for electron profile measurements. The electrode 8, 10 may also be made of copper or any other suitable conductive material for X-ray profile measurements.

While the forms of the ionization chamber herein described constitute preferred embodiments of the invention, is is to be understood that the invention is not limited to these precise forms of assembly, and that a variety of changes may be made therein without departing from the scope of the claims.

## Claims

1. An ionization chamber for measuring a profile of a radiation field (R), comprising:
   a) a first electrode (8);
   b) a second electrode (10) arranged parallel to said first electrode (8), both electrodes (8, 10) forming a gap (12) therebetween;
   c) a shield (14) made of a material opaque to ions produced by the radiation field (R), said shield (14) being movably arranged in said gap (12) between said electrodes (8, 10) and having an aperture (16), said aperture (16) arranged between said electrodes (8, 10) forming a measuring volume; and
   d) means (24) for moving said shield (14) including said aperture (16) along said gap (12) between said electrodes (8, 10).

2. The ionization chamber according to claim 1, wherein said first and second electrodes (8, 10) are attached to respective first and second plates (4, 6).

3. The ionization chamber according to claim 2, wherein said plates (4, 6) are made of Lucite.

4. The ionization chamber according to claim 1, 2 or 3, wherein said aperture (16) is an elongated slot which extends perpendicularly in the moving direction (22) of said shield (14).

5. The ionization chamber according to any of claims 1 to 4, wherein said shield (14) is made of an electrically conducting material having a coat (15) of an isolation material.

6. The ionization chamber according to claim 5, wherein said conducting material is copper.

7. The ionization chamber according to claim 5 or 6, wherein said shield (14) is electrically grounded.

8. The ionization chamber according to claim 5, 6 or 7, wherein said coat (15) is made of Lucite.

9. The ionization chamber according to any of the claims 1 to 8, wherein said moving means (24) comprises an electric motor (26).

10. The ionization chamber according to any of the claims 1 to 9, wherein the length of the shield (14) is at least twice the length of said electrodes (8, 10).

11. The ionization chamber according to any of the claims 1 to 10, wherein said electrodes (8, 10) are made of copper for electron profile measurements.

12. The ionization chamber according to any of the claims 1 to 10, wherein said electrodes (8, 10) are made of copper for X-ray profile measurements.

## Patentansprüche

1. Ionisationskammer zur Messung des Profils eines Strahlungsfeldes (R), mit:

a) einer ersten Elektrode (8);

b) einer zweiten Elektrode (10), die parallel zur ersten Elektrode (8) angeorduet ist, wodurch ein Spalt (12) zwischen den beiden Elektroden (8, 10) gebildet wird;

c) einem Schirm (14), bestehend aus einem Material, das die vom Strahlungsfeld (R) erzeugte Ionen nicht durchläßt, wobei der Schirm (14) beweglich im Spalt (12) zwischen den beiden Elektroden (8, 10) angeordnet ist und eine Öffnung (16) aufweist, die zwischen den Elektroden (8, 10) liegt und ein Meßvolumen bildet; und

d) Bewegungsmittel (24) zum Bewegen des Schirms (14) samt Öffnung (16) entlang des Spaltes (12) zwischen den beiden Elektroden (8, 10).

2. Ionisationskammer nach Anspruch 1, wobei die erste Elektrode (8) mit einer ersten Platte (4) und die zweite Elektrode (10) mit einer zweiten Platte (6) verbunden ist.

3. Ionisationskammer nach Anspruch 2, wobei die Platten (4, 6) aus Lucite hergestellt sind.

4. Ionisationskammer nach einem der Ansprüche 1 bis 3, wobei die Öffnung (16) als langer Schlitz, der senkrecht zur bewegungsrichtung (22) des Schirmes (14) verläuft, ausgebildet ist.

5. Ionisationskammer nach einem der Ansprüche 1 bis 4, wobei der Schirm (14) aus einem elektrisch leitenden Material mit einer Außenschicht (15) aus Isoliermaterial hergestellt ist.

6. Ionisationskammer nach Anspruch 5, wobei das elektrisch leitende Material Kupfer ist.

7. Ionisationskammer nach Anspruch 5 oder 6, wobei der Schirm (14) elektrisch geerdet ist.

8. Ionisationskammer nach einem der Ansprüche 5 bis 7, wobei di Außenschicht (15) aus Lucite hergestellt ist.

9. Ionisationskammer nach einem der Ansprüche 1 bis 8, wobei di Bewegungsmittel (24) einen elektrischen Motor (26) umfassen.

10. Ionisationskammer nach einem der Ansprüche 1 bis 9, wobei di Länge des Schirmes (14) wenigstens die doppelte Länge der Elektroden (8, 10) aufweist.

11. Ionisationskammer nach einem der Ansprüche 1 bis 10, wobei die Elektroden (8, 10) aus Kupfer zur Messung des Elektronenprofils hergestellt sind.

12. Ionisationskammer nach einem der Ansprüche 1 bis 10, wobei di Elektroden (8, 10) aus Kupfer zur Messung des Röntgenstrahlenprofils hergestellt sind.

## Revendications

1. Chambre d'ionisation pour mesurer le profil d'un champ rayonnant (R), comprenant:

a) une première électrode (8);

b) une seconde électrode (10) disposée parallèlement à la première électrode (8), les deux électrodes (8, 10) formant un intervalle (12) entre elles;

c) un écran (14) fait d'un matériau opaque aux ions produits par le champ rayonnant (R), cet écran (14) étant disposé mobile dans l'intervalle (12) entre les électrodes (8, 10) et présentant une ouverture (16), cette ouverture (16) étant disposée entre les électrodes (8, 10) et formant un volume de mesure; et

d) un moyen (24) pour déplacer l'écran (14), présentant l'ouverture (16), le long de l'intervalle (12) entre les électrodes (8, 10).

2. Chambre d'ionisation selon la revendication 1, dans laquelle les première et seconde électrodes (8, 10) sont attachées respectivement à une première et une seconde plaque (4, 6).

3. Chambre d'ionisation selon la revendication 2, dans laquelle les plaques (4, 6) sont en Lucite.

4. Chambre d'ionisation selon la revendication 1, 2 ou 3, dans laquelle l'ouverture (16) est une fente de forme allongée qui s'étend perpendiculairement à la direction de mouvement (22) de l'écran (14).

5. Chambre d'ionisation selon l'une quelconque des revendications 1 à 4, dans laquelle l'écran (14) est fait d'un matériau conducteur électrique portant un revêtement (15) de matériau isolant.

6. Chambre d'ionisation selon la revendication 5, dans laquelle le matériau conducteur est du cuivre.

7. Chambre d'ionisation selon la revendication 5 ou 6, dans laquelle l'écran (14) est électriquement relié à la terre.

8. Chambre d'ionisation selon la revendication 5, 6 ou 7, dans laquelle le revêtement (15) est en Lucite.

9. Chambre d'ionisation selon l'une quelconque des revendications 1 à 8, dans laquelle le moyen de déplacement (24) comprend un moteur électrique (26).

10. Chambre d'ionisation selon l'une quelconque des revendications 1 à 9, dans laquelle la longueur de l'écran (14) est au moins le double de la longueur des électrodes (8, 10).

11. Chambre d'ionisation selon l'une quelconque des revendications 1 à 10, dans laquelle les électrodes (8, 10) sont en cuivre pour des mesures du profil de flux d'électrons.

12. Chambre d'ionisation selon l'une quelconque des revendications 1 à 10, dans laquelle les électrodes (8, 10) sont en cuivre pour des mesures du profil de rayons X.

FIG 1

FIG 2

FIG 3

FIG 4

FIG 5